(19) Europäisches Patentamt

European Patent Office

Office européen des brevets

(11) **EP 1 347 417 A2**

(12) **EUROPEAN PATENT APPLICATION**

(43) Date of publication:
**24.09.2003 Bulletin 2003/39**

(51) Int Cl.⁷: **G06T 7/60**

(21) Application number: **03075423.8**

(22) Date of filing: **13.02.2003**

| | |
|---|---|
| (84) Designated Contracting States:<br>**AT BE BG CH CY CZ DE DK EE ES FI FR GB GR<br>HU IE IT LI LU MC NL PT SE SI SK TR**<br>Designated Extension States:<br>**AL LT LV MK RO**<br><br>(30) Priority: **25.02.2002 US 82458**<br><br>(71) Applicant: **EASTMAN KODAK COMPANY**<br>**Rochester, New York 14650 (US)** | (72) Inventors:<br>• **Velazquez, Belimar**<br>  **c/o Eastman Kodak Company**<br>  **Rochester, New York 14650-2201 (US)**<br>• **Schildkraut, Jay S. c/o Eastman Kodak Company**<br>  **Rochester, New York 14650-2201 (US)**<br><br>(74) Representative: **Weber, Etienne Nicolas et al**<br>**Kodak Industrie,**<br>**Département Brevets,**<br>**CRT,**<br>**Zone Industrielle**<br>**71102 Chalon sur Saône Cedex (FR)** |

(54) **Face detection computer program product for redeye correction**

(57)     A method of calculating the size of a human face in a digital image, includes the steps of: providing image capture metadata associated with a digital image that includes the image of a human face, the metadata including subject distance, focal length, focal plane resolution; providing a standard face dimension; and calculating the size of a human face at the focal plane using the metadata and the standard face size.

*FIG. 2*

**Description**

The invention relates generally to the field of digital image processing, and in particular to a method for detecting faces and correcting redeye artifacts in digital images.

When flash illumination is used for the capture of an image, sometimes the pupils of people in the image appear red. This is caused by light from the flash unit entering the pupil, reflecting off the retina, and finally exiting back through the pupil. Because light is partially absorbed by light in the retina, the pupil appears red in the image. This phenomenon is referred to as "redeye." The probability of redeye being observed increases as the distance between the flash unit and the optical axis of the lens decreases. Therefore, redeye is commonly observed in images captured by a small camera with an integral flash unit.

US Patent 6,252,976 issued June 26, 2001 to Schildkraut et al. discloses a method for automatically correcting eye color defects in an image. One shortcoming of the method is that it requires that all skin colored regions having characteristics of a human face need to be examined for the possible presence of eyes. This imposes a computational burden and increases the time required to optimally render and reproduce copies of captured images. Therefore, a need exists for faster and better classification of faces in an image.

The need is met according to the present invention by providing a method of calculating the size of a human face in a digital image, that includes the steps of: providing image capture metadata associated with a digital image that includes the image of a human face, the metadata including subject distance, focal length, focal plane resolution; providing a standard face dimension; and calculating the size of a human face at the focal plane using the metadata and the standard face size.

The present invention has the advantage that skin colored regions that fall outside the calculated range are not taken into consideration for further analysis in the redeye detection and correction portion of the algorithm, thereby increasing the speed and efficiency of the method.

Fig. 1 is a block diagram showing an image processing system useful in practicing the present invention;

Fig. 2 is a detailed flowchart of the face size calculation method of the present invention; and

Fig. 3 is a graph useful in explaining the assigning of a score to the face width.

The present invention will be described as implemented in a programmed digital computer. It will be understood that a person of ordinary skill in the art of digital image processing and software programming will be able to program a computer to practice the invention from the description given below. The present invention may be embodied in a computer program product having a computer readable storage medium such as a magnetic or optical storage medium bearing machine readable computer code. Alternatively, it will be understood that the present invention may be implemented in hardware or firmware.

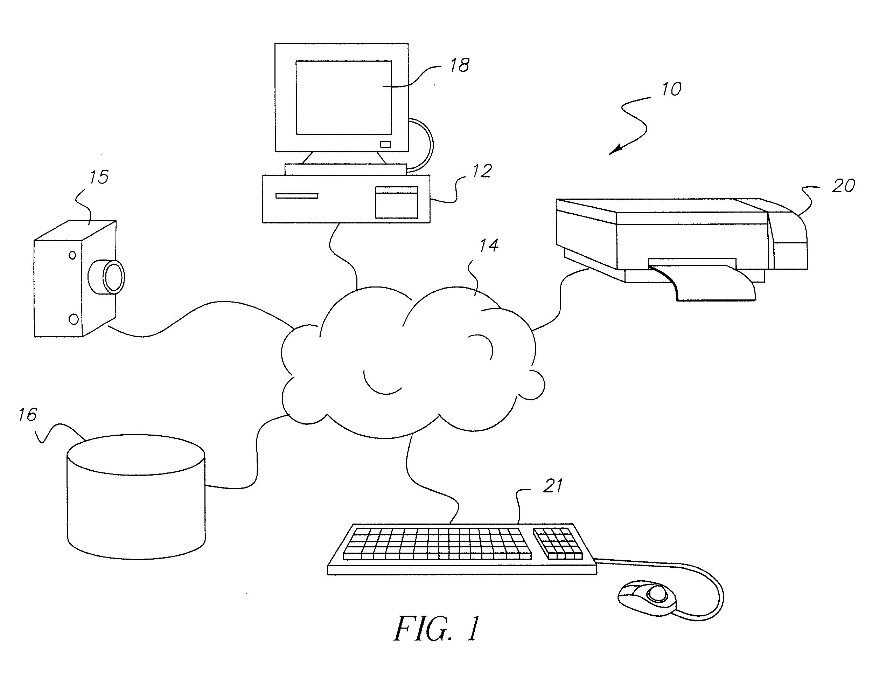

Referring first to Fig. 1, a digital image processing system useful for practicing the present invention is shown. The system generally designated **10**, includes a digital image processing computer **12** connected to a network **14**. The digital image processing computer **12** can be, for example, a Sun Sparcstation, and the network **14** can be, for example, a local area network with sufficient capacity to handle large digital images. The system includes an image capture device **15**, such as a high resolution digital camera, or a conventional film camera and a film digitizer, for supplying digital images to network **14**. A digital image store **16**, such as a magnetic or optical multi-disk memory, connected to network **14** is provided for storing the digital images to be processed by computer **12** according to the present invention. The system **10** also includes one or more display devices, such as a high resolution color monitor **18**, or hard copy output printer **20** such as a thermal or inkjet printer. An operator input, such as a keyboard and track ball **21**, may be provided on the system.

The goal of the present invention is to reduce the processing time required to detect faces in an image. The present invention makes use of metadata associated with the image file or capture source. By using metadata, it is possible to calculate the expected size of a given object in the image. Specifically, it is possible to calculate the expected range of face sizes in an image. The present invention requires image capture metadata associated with a digital image. The image capture metadata includes information specific to the capture source and the digital file. These metadata items may be collected by the electronics in the image capture device such as a digital still camera and/or by manual photographer input. In addition, association of the metadata to the image file can occur through the use of look-up-tables or through the use of image file formats that make provisions for recording capture information. An example of such format is the Exif image file format as described in the JEIDA specification: Digital Still Camera Image File Format Standard (Exchangeable image file format for Digital Still Cameras: Exif), Version 2.1, June 12, 1998, Japan Electronic Industry Development Association.

In the following description, the present invention will be described in the preferred embodiment as a software program. This program may be implemented as part of a digital photofinishing environment or as part of a digital camera.

The metadata used in one embodiment of the present invention include:

⇒ $f$- focal length of the lens

⇒  $F_{number}$ - f-number of the lens
⇒  $R$ - focal plane resolution (pixels per inch)
⇒  $s$ - subject distance (distance from focused plane to the lens).

The following parameters can be calculated using the metadata items listed above:

⇒  $d$ - lens aperture
⇒  $c$ - diameter of the circle of confusion
⇒  $l_{FAR}$ - far depth limit distance in object space measured from the lens
⇒  $l_{NEAR}$ - near depth limit distance in object space measured from the lens
⇒  $M$ - Magnification factor
⇒  $W_0$ - Expected width of a face
⇒  $S(W)$ - Scoring function

The approach taken in the present invention is to use the subject distance metadata along with lens focal length, $F$-number, and image plane resolution metadata in order to determine expected face size in the image at the subject distance and at the near and far boundaries of the depth of field. Image content with the color and shape of a human face is scored based on the degree that its size makes the size of an average face at the subject distance. This score, which has a maximum value of one, falls to zero for face sizes at the near and far boundaries of the depth of field. In this way, many face like-regions are bypassed for most of the image processing that is involved in redeye detection. Hence, the average processing time per image is decreased along with the false positive rate.

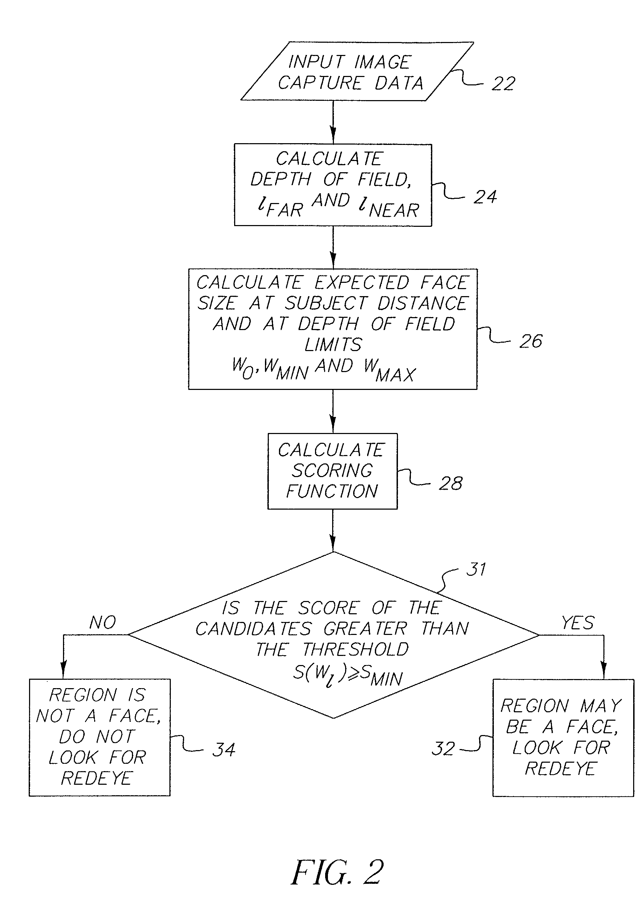

The application of metadata for redeye detection is divided into three stages. The first stage is the calculation of depth of field using camera metadata. The next stage is the determination of average face size at the depth of field limits and subject distance. The final stage is the integration of metadata-based expected face sizes into the existing redeye detection algorithm. Referring to Fig. 2, the face detection method of the present invention proceeds as follows. First, input image data and capture condition metadata are input **22** to the process.

Next, the depth of field is calculated **24**. The equations for the depth of field for a fixed circle of confusion in the image plane were taken from Optics in Photography, by R. Kingslake, SPIE Optical Engineering Press (1992), pp. 92-96.

The distance between the lens and the far and near depth of field limits are:

$$l_{FAR} = \frac{s}{1 - X} \tag{1}$$

$$l_{NEAR} = \frac{s}{1 + X} \tag{2}$$

where

$$X = \frac{c}{f \cdot d}(s\text{-}f) \tag{3}$$

In the above equations, s is the subject distance, $f$ is the focal length of the lens, $d$ is the lens aperture, and $c$ is the diameter of the circle of confusion. The lens aperture is simply given by the ratio between the focal length and the $F$-number,

$$d = \frac{f}{F_{number}} \tag{4}$$

The metadata includes $s$, $f$, and the $F$-number. The circle of confusion, $c$, must be set based on a criteria for scene content to be in focus at the image plane. Instead of setting c directly, it is calculated as a fraction $r$ of the aperture diameter using:

$$c = r \cdot d \tag{5}$$

At a subject distance $s$, at which $X$ equals one, the far depth field limit $l_{FAR}$ goes to infinity. This subject distance is called the hyperfocal distance. For the purpose of calculation, when $X$ is equal to or greater than 1.0, the value of $l_{FAR}$ is set to the very large distance $10^7$ meters.

Next, the expected face size expressed as a width in pixels is calculated **26.** The expected width in pixels of a face at a distance $l$ from the camera is given by the equation,

$$W_0 = D_{face} \cdot M \cdot R, \tag{6}$$

where $D_{face}$ is the average width of a human face, $M$ is the magnification, and $R$ is the image plane resolution in pixels/ unit length. The magnification is given by,

$$M = \frac{f}{l - f}. \tag{7}$$

The average face size, $D_{face}$, is set to 6.0 inches (0.15 meters).

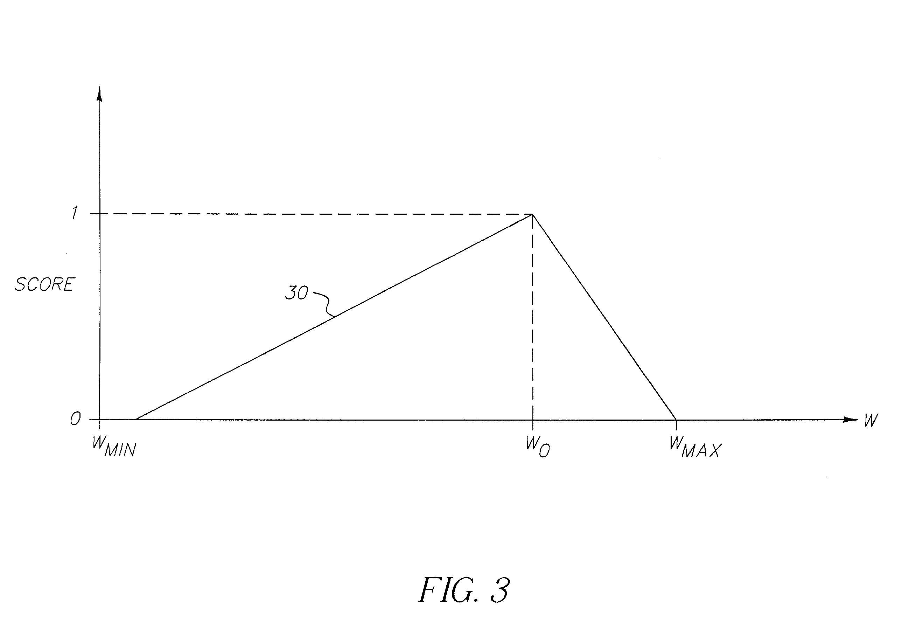

Next, a scoring function, $S(W)$, that is used to assign a metadata based score to a candidate face is calculated **28** shown by the graph **30** in Fig. 3, which relates the score to the face width W expressed in pixels. As shown in the figure, the scoring function peaks at a value of 1.0 at the expected face width $W_0$. It goes linearly to zero at the minimum face width $W_{min}$ and a maximum face width $W_{max}$ that correspond to distances from the camera of $l_{Far}$ and $l_{Near}$, respectively.

The equation for the scoring function is as follows:

$$if\,(W_{min} < W < W_0) \quad S(W) = 1 - \frac{W_0 - W}{W_0 - W_{min}}$$

$$else\,if\,(W_0 < W < W_{max}) \quad S(W) = 1 - \frac{W - W_0}{W_{max} - W_0} \tag{8}$$

$$else \quad S(W) = 0$$

The redeye correction algorithm described in US Patent 6,252,976, which is incorporated herein by reference, performs image processing and classification in order to locate candidate face regions in an image. According to the present invention, metadata is used in the redeye algorithm to assign a score using Eq. (8) to each candidate face.

Finally, a test is made **31** to determine if a candidate face region is a face. A face candidate is classified as a face **32** if

$$S(W_i) \geq S_{min} \tag{9}$$

where $S_{min}$ is a parameter that sets the minimum face metadata score. The face candidate that is classified as a face is then evaluated for the presence of redeye using the redeye correction algorithm disclosed in US Patent 6,252,976. A face candidate region having a score that is below the threshold is not evaluated **34** during the redeye detection phase of the redeye correction algorithm.

The red-eye detection and correction algorithm disclosed in the preferred embodiment(s) of the present invention may be employed in a variety of user contexts and environments. Exemplary contexts and environments include, without limitation, wholesale digital photofinishing (which involves exemplary process steps or stages such as film in, digital processing, prints out), retail digital photofinishing (film in, digital processing, prints out), home printing (home scanned film or digital images, digital processing, prints out), desktop software (software that applies algorithms to digital prints to make them better -or even just to change them), digital fulfillment (digital images in - from media or over the web, digital processing, with images out - in digital form on media, digital form over the web, or printed on hard-copy prints), kiosks (digital or scanned input, digital processing, digital or hard copy output), mobile devices (e. g., PDA or cellphone that can be used as a processing unit, a display unit, or a unit to give processing instructions), and as a service offered via the World Wide Web.

In each case, the algorithm may stand alone or may be a component of a larger system solution. Furthermore, the interfaces with the algorithm, e.g., the scanning or input, the digital processing, the display to a user (if needed), the input of user requests or processing instructions (if needed), the output, can each be on the same or different devices and physical locations, and communication between the devices and locations can be via public or private network connections, or media based communication. Where consistent with the foregoing disclosure of the present invention, the algorithm(s) themselves can be fully automatic, may have user input (be fully or partially manual), may have user or operator review to accept/reject the result, or may be assisted by metadata (metadata that may be user supplied, supplied by a measuring device (e.g. in a camera), or determined by an algorithm). Moreover, the algorithm(s) may interface with a variety of workflow user interface schemes.

The algorithm(s) disclosed herein in accordance with the invention may have interior components that utilize various data detection and reduction techniques (e.g., face detection, eye detection, skin detection, flash detection).

**Claims**

1.  A method of calculating the size of a human face in a digital image, comprising the steps of:

    a) providing image capture metadata associated with a digital image that includes the image of a human face, the metadata including subject distance, focal length, focal plane resolution;
    b) providing a standard face dimension; and
    c) calculating the size of a human face at the focal plane using the metadata and the standard face size.

2.  A method of detecting a face in an image, comprising the steps of:

    a) detecting a skin colored region in a digital image;
    b) calculating the expected size of a human face in the digital image by,

        i) providing image capture metadata associated with a digital image that includes the image of a human face including subject distance, focal length, focal plane resolution,
        ii) providing a standard face dimension, and
        iii) calculating the size of a human face using the metadata and the standard face dimension; and

    c) comparing the size of the detected skin color region with the calculated size of a human face to determine if the skin color region is a human face.

3.  The method claimed in claim 2, further comprising the step of evaluating a detected face region for red-eye defects.

4.  The method of claim 1, wherein the digital image is captured by a digital camera that includes means for appending the metadata to a digital image file in the camera.

5.  The method of claim 2, wherein the digital image is captured by a digital camera that includes means for appending the metadata to a digital image file in the camera.

6.  A method of calculating the expected size range of human faces in a digital image, comprising the steps of:

    a) providing image capture metadata associated with a digital image that includes the image of a human face, the metadata including subject distance, focal length, focal plane resolution and f-number;
    b) providing a standard face dimension;
    c) calculating the depth of field using the metadata; and
    d) calculating the range of expected face sizes in the digital image based on the depth of field calculation and standard face size.

7.  A method of detecting faces in an image, comprising the steps of:

    a) detecting a skin colored region in a digital image;
    b) calculating the expected size of a human face in the digital image by,

        i) providing image capture metadata associated with a digital image that includes the image of a human face, the metadata including subject distance, focal length, focal plane resolution and f-number,
        ii) providing a standard face dimension,

iii) calculating the depth of field with the metadata, and
iv) calculating the range of expected face sizes in a digital image based on the depth of field calculation and standard face size.

**8.** The method of claim 7, further comprising the step of evaluating the region for eye color defects.

*FIG. 1*

FIG. 2

*FIG. 3*